# EUROPEAN PATENT SPECIFICATION

(11) **EP 2 722 730 B1**
(45) Date of publication and mention of the grant of the patent: **10.10.2018**
(21) Application number: 11868161.8
(22) Date of filing: 15.08.2011
(51) Int. Cl.: G06F 3/0346

(54) **MOBILE TERMINAL AND METHOD FOR MOVING CURSOR THEREOF**
MOBILES ENDGERÄT UND VERFAHREN ZUM BEWEGEN EINES CURSERS DAFÜR
TERMINAL MOBILE ET PROCÉDÉ DE DÉPLACEMENT DE CURSEUR ASSOCIÉ

(30) Priority: 20.06.2011 CN 201110165570
(43) Date of publication of application: 23.04.2014
(73) Proprietor: ZTE Corporation, Shenzhen, Guangdong 518057 (CN)
(72) Inventor: CHEN, Yilin, Shenzhen Guangdong 518057 (CN); ZENG, Yiting, Shenzhen Guangdong 518057 (CN); LIN, Junxuan, Shenzhen Guangdong 518057 (CN); WANG, Haowen, Shenzhen Guangdong 518057 (CN); ZHANG, Zhiping, Shenzhen Guangdong 518057 (CN); LV, Qiuyu, Shenzhen Guangdong 518057 (CN)
(74) Representative: J A Kemp
(86) International application number: PCT/CN2011/078432
(87) International publication number: WO 2012/174783

(56) References cited:
- WO-A2-2010/076772
- CN-A- 1 866 168
- CN-A- 101 076 166
- CN-A- 101 206 536
- CN-A- 101 551 718
- JP-A- 2007 026 146
- JP-A- 2010 204 810
- US-A1- 2008 143 675

## Description

### TECHNICAL FIELD

The disclosure relates to the field of mobile communication technology, and in particular to a mobile terminal and a method for implementing movement of a cursor thereof.

### BACKGROUND

In a current consumer market for mobile terminals, functions of a mobile terminal are becoming more and more enrichment and standardization. Real enhancement of a user experience level of a mobile terminal is becoming a key to well selling of the mobile terminal. For most of existing mobile terminals, a method for moving a text cursor in the process of inputting is completed by a direction key or by touching and directly clicking. Such two methods seem intuitive whereas they have some disadvantages and limitations. Firstly, touch-screen mobile terminals are becoming more popular at present, most of which cancel hard keyboard support. Secondly, middle-end and high-end mobile terminals are increasingly using a capacitive screen. Although the capacitive screen is more sensitive, it has a great disadvantage of inaccuracy of clicking. Therefore, it is difficult to position the cursor accurately by touching. Thirdly, a full-screen handwriting input method is more and more popular, but many mobile terminals fail to switch the position of a cursor by a touch screen in the case of full screen handwriting. These disadvantages affect user experience for mobile terminals.

Document JP 2010 204810 A provides a portable information terminal which includes an inclination detection part which detects inclination of a casing of the portable information terminal, a display part which displays information and a pointer position control part which controls the display position of a pointer displayed by the display part according to the inclination detected by the detection part. The pointer position display part performs access control, when the distance between the display position of the pointer and a target area is a predetermined distance or less, to move the display position of the pointer to the target area.

Document WO 2010/076772 A2 provides a method for imparting control to an application program running on a mobile device. Said method comprises the acts of displaying a graphical user interface of the AP on a touch panel of the mobile device; capturing a touch input on a portion of the GUI. The method further comprises, when identifying the touch input as a touch input of a predefined first type, the acts of imparting a first AP control associated to the portion of the GUI; monitoring an occurrence of a spatial movement of the mobile device; imparting a second AP control associated to the portion of the GUI in response to the capture of a spatial movement.

Document US 2008/143675 A1 provides an inertial sensing method which is capable of detecting tilting of an inertial sensing apparatus with respect to a specific level surface while using the detection for defining/controlling movements of a cursor displayed on a display.

Document JP 2007 026146 provides an operation device and an operation system for increasing operability of the cursor movement on each operation screen based on an inclination angle of a device, in which the inclination of the operation device is detected by an inclination angle detection part and a posture signal is outputted. Depending on the operation screen, a cursor control part uses either a first cursor control in which, based on the posture signal, a cursor is moved by specifying one of a plurality of instruction keys, or a second cursor control in which a cursor is moved in the direction that the operation device inclines based on the posture signal, and an instruction key where the cursor is located is selected.

### SUMMARY

The disclosure provides a mobile terminal and a method for implementing movement of a cursor thereof, so as to solve the problem of inaccuracy of cursor positioning and affecting user experience in the related art.

In order to solve the aforementioned problem, the disclosure provides a method for implementing movement of a cursor by a mobile terminal, which includes:
acquiring accelerations aₓ, a_{y}, and a_{z} of a mobile terminal in a set three-dimensional coordinate system;
calculating a current left/right tilt rate K1 and a current forward/backward tilt rate K2 of the mobile terminal based on the accelerations aₓ, a_{y}, and a_{z}; and
moving a cursor left/right or forward/backward based on the tilt rate K1 and the tilt rate K2,
the step of moving a cursor left/right or forward/backward based on the tilt rate K1 and the tilt rate K2 may include:
   step 41: starting a preset left/right movement timeout timer T1 and a preset forward/backward movement timeout timer T2;
   step 42: when the timer T1 or the timer T2 expires, determining whether the tilt rate |K1| or the tilt rate |K2| exceeds a set threshold; and
   step 43: when the tilt rate |K1| or the tilt rate |K2| exceeds the set threshold, moving the cursor one grid left/right or forward/backward, continuing to determining movement of the cursor based on the current |K1| or |K2|, and returning to the step 41,
in which timing time of the timer T1 may be T1=A1/|K1| and timing time of the timer T2 may be T2=A2/|K2|, wherein A1 and A2 may be constants.

Wherein, " / " in left/right and forward/backward refers to the meaning of the wording "or".

In the method of the disclosure, the step of acquiring accelerations aₓ, a_{y}, and a_{z} of a mobile terminal in a set three-dimensional coordinate system may include:
subscribing an acceleration induction vector GVector event, and acquiring the accelerations aₓ, a_{y}, and a_{z} of the mobile terminal in set three-dimensional coordinate axes according to acquired GVector information in real time.

In the method of the disclosure, the step of calculating a current left/right tilt rate K1 and a current forward/backward tilt rate K2 of the mobile terminal based on the accelerations aₓ, a_{y}, and a_{z} may include:
according to the accelerations aₓ, a_{y}, and a_{z}, obtaining the left/right tilt rate K1 using aₓ/a_{y}, and obtaining the forward/backward tilt rate K2 using a_{y}/a_{z}.

In the method of the disclosure, in the step 43, before the step 41 is returned to, the timing time T1 or T2 is re-calculated based on the current |K1| or |K2|.

In the method of the disclosure, before acquiring the accelerations aₓ, a_{y}, and a_{z} of the mobile terminal in the set three-dimensional coordinate system, the method may further include;
determining whether a movement function of a gravity induction cursor is enabled, and when the movement function of the gravity induction cursor is enabled, triggering an operation of acquiring the accelerations aₓ, a_{y}, and a_{z} of the mobile terminal in the set three-dimensional coordinate system.

The disclosure further provides a mobile terminal, which includes:
an information acquiring unit configured to acquire accelerations aₓ, a_{y}, and a_{z} of a mobile terminal in a set three-dimensional coordinate system;
a tilt rate calculating unit configured to calculate a current left/right tilt rate K1 and a current forward/backward tilt rate K2 of the mobile terminal based on the accelerations aₓ, a_{y}, and a_{z}; and
a cursor moving unit configured to move a cursor left/right or forward/backward based on the tilt rate K1 and the tilt rate K2,
the cursor moving unit may further include:
   a timing sub-unit configured to start a preset left/right movement timeout timer T1 and a preset forward/backward movement timeout timer T2;
   a determining sub-unit configured to, when the timer T1 or the timer T2 expires, determine whether the tilt rate |K1| or the tilt rate |K2| exceeds a set threshold; and
   a cursor moving sub-unit configured to: when the tilt rate |K1| or the tilt rate |K2| exceeds the set threshold, move the cursor one grid left/right or forward/backward, continue to determining movement of the cursor based on the current |K1| or |K2|, and trigger the timing sub-unit,
   in which timing time of the timer T1 may be T1=A1/|K1| and timing time of the timer T2 may be T2=A2/|K2|, wherein A1 and A2 may be constants.

Wherein, the information acquiring unit may be configured to subscribe an acceleration induction vector GVector event, and acquire the accelerations aₓ, a_{y}, and a_{z} of the mobile terminal in set three-dimensional coordinate axes according to acquired GVector information in real time; and
the tilt rate calculating unit may be configured to, according to the accelerations aₓ, a_{y}, and a_{z}, obtain the left/right tilt rate K1 using aₓ/a_{y}, and obtain the forward/backward tilt rate K2 using a_{y}/a_{z}.

Wherein, in the timing sub-unit, before the cursor moving sub-unit triggers the timing sub-unit, the timing time T1 or T2 is re-calculated based on the current |K1| or |K2|.

Further, the mobile terminal of the disclosure may further include:
a detecting unit configured to: determine whether a movement function of a gravity induction cursor is enabled, and trigger the information acquiring unit when the movement function of the gravity induction cursor is enabled.

Compared with the related art, the disclosure has the following beneficial effects:
with the method and the device of the disclosure, a user needs only to tilt a mobile terminal in all directions to move a cursor at will. The severer tilt is, the faster the cursor moves. In this way, the trouble of repeated touch or key-press is reduced, high efficiency and convenience is achieved, and user experience is enhanced.

### BRIEF DESCRIPTION OF THE DRAWINGS

Fig. 1 is a flowchart of a method for implementing movement of a cursor by a mobile terminal according to the disclosure;
Fig. 2 is a flowchart of a method for implementing movement of a cursor by a mobile terminal according to an embodiment of the disclosure;
Fig. 3 is a schematic diagram of a three-dimensional coordinate system of a mobile terminal defined in an embodiment of the disclosure; and
Fig. 4 is a diagram of a structure of a mobile terminal according to the disclosure.

### DETAILED DESCRIPTION

A clear and complete description will be performed on the technical solution of embodiments of the disclosure below with reference to the drawings in the embodiments of the disclosure. Obviously, the described embodiments are merely a part of embodiments of the disclosure instead of all embodiments. Based on the embodiments of the disclosure, all other embodiments obtained by those skilled in the art without paying any creative labour should fall within the scope of protection of the disclosure.

In order to solve the problem existing in the related art, the disclosure provides a mobile terminal and a method for implementing movement of a cursor thereof. The disclosure uses a gravity inductor of a mobile terminal to automatically move a cursor according to a direction and level of a tilt of the mobile terminal instead of touch or key-press, which enhances convenience greatly.

Wherein, the gravity inductor is also referred to as an acceleration inductor, which is a device of converting an acceleration signal of a medium into an electric signal. The medium produces formation under acceleration to generate a tiny voltage. By means of measuring such voltage, accelerations of the medium in all directions of a three-dimensional space can be obtained, thereby obtaining a state of motion or a horizontal tilt degree of a mobile terminal.

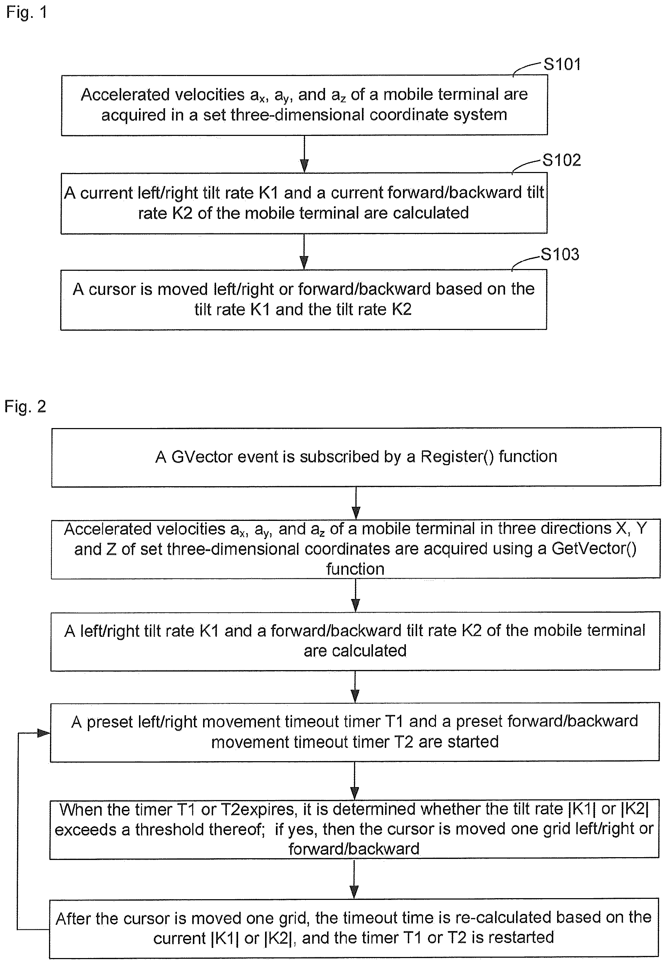

As shown in Fig. 1, a method for implementing movement of a cursor by a mobile terminal provided by the disclosure includes the following steps:
S101: Accelerations aₓ, a_{y}, and a_{z} of a mobile terminal are acquired in a set three-dimensional coordinate system;
S102: A current left/right tilt rate K1 and a current forward/backward tilt rate K2 of the mobile terminal are calculated; and
S103: A cursor is moved left/right or forward/backward based on the tilt rate K1 and the tilt rate K2.

In step S103, the step of moving a cursor left/right or forward/backward based on the tilt rate K1 and the tilt rate K2 specifically includes:
(1) a preset left/right movement timeout timer T1 and a preset forward/backward movement timeout timer T2 are started;
(2) when the timer T1 or the timer T2 expires, it is determined whether the tilt rate |K1| or the tilt rate |K2| exceeds a set threshold; and
(3) when the tilt rate |K1| or the tilt rate |K2| exceeds the set threshold, the cursor is moved one grid left/right or forward/backward, it continues to determining movement of the cursor based on the current |K1| or |K2|, and the step (1) is returned to.

Wherein, timing time of the timer T1 and timing time of the timer T2 are preset fixed values; or, timing time of the timer T1 is T1=A1/|K1| and timing time of the timer T2 is T2=A2/|K2|, wherein A1 and A2 are constants; and
when T1=A1/|K1| and T2=A2/|K2|, in the step (3), before the step (1) is returned to, the timing time T1 or T2 is re-calculated based on the current |K1| or |K2|.

Preferably, before executing step S101, the method further includes:
it is determined whether a movement function of a gravity induction cursor is enabled, and when the movement function of the gravity induction cursor is enabled, an operation of acquiring the accelerations aₓ, a_{y}, and a_{z} of the mobile terminal in the set three-dimensional coordinate system in step S101 is triggered.

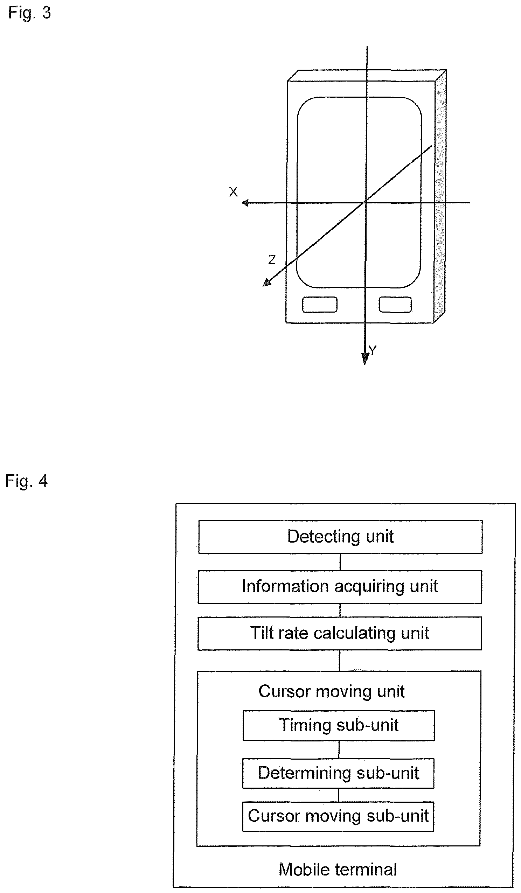

Two preferable embodiments of the disclosure are given below with reference to Fig. 2 and Fig. 3, and technical detail of the disclosure is further given in combination with description of embodiments.

### Embodiment 1

As shown in Fig. 2, an embodiment of the disclosure provides a method for implementing movement of a cursor by a mobile terminal, which includes:
S201: A GVector event is subscribed by a Register() function.

After the GVector event is subscribed, the GVector event can be received when an acceleration status is changed.

S202: Accelerations aₓ, a_{y}, and a_{z} of a mobile terminal in three directions X, Y and Z of set three-dimensional coordinates are acquired using a GetVector() function. Wherein, the original point of the established three-dimensional coordinate system X, Y and Z is preferably a centre-of-gravity position of the mobile terminal.

In the embodiment, taking a mobile terminal in vertical screen movement as an example, and as shown in Fig. 3, a direction of a lateral edge of the mobile terminal is taken as X axis and the left direction is the positive direction, a direction of a vertical edge of the mobile terminal is taken as Y axis and the backward direction is the positive direction, and a direction perpendicular to a plane of the mobile terminal is taken as Z axis and the direction pointing to a user is the positive direction. Accelerations on obtained three axes are defined as aₓ, a_{y}, and a_{z} respectively. Wherein, obtained accelerations aₓ, a_{y}, and a_{z} are different according to a moving direction of the mobile terminal. Based on set positive directions of coordinate axes, the accelerations aₓ, a_{y}, and a_{z} can be either positive values or negative values. A specific symbol is determined according to a tilt direction of the mobile terminal.

S203: A left/right tilt rate K1 and a forward/backward tilt rate K2 of the mobile terminal are calculated, wherein K1 = aₓ/a_{y} and K2 = a_{y}/a_{z}.

In the step, when K1 is 0, the mobile terminal does not tilt in an XY plane, when K1 is greater than 0, it is indicated that the mobile terminal tilts to the left, and when K1 is less than 0, it is indicated that the mobile terminal tilts to the right. The greater the absolute value of K1 is, the severer the tilt is.

In a similar way, when K2 is 0, the mobile terminal is placed horizontally, when K2 is less than 0, it is indicated that the mobile terminal tilts backward, and when K2 is greater than 0, it is indicated that the mobile terminal tilts forward. The greater the absolute value of K2 is, the severer the tilt is.

S204: A preset left/right movement timeout timer T1 and a preset forward/backward movement timeout timer T2 are started. Wherein, for the timers T1 and T2, timeout time can be defined as a fixed value, but is preferably defined as: T1=A1/|K1| and T2=A2/|K2|, wherein A1 and A2 are constants. A user can also adjust a movement speed of a cursor by setting values of A1 and A2. The timeout time T1 and T2 is inversely proportional to the absolute value of a tilt rate K. Subsequent steps of the embodiment of the disclosure are described by taking T1=A1/|K1| and T2=A2/|K2| as example.

S205: When the timer T1 expires, it is determined whether the tilt rate |K1| exceeds a set threshold L1 thereof; if yes, then the cursor is moved one grid left or right (K1 is positive or negative); and
when the timer T2 expires, it is determined whether the tilt rate |K2| exceeds a set threshold L2 thereof; if yes, then the cursor is moved one grid upward or downward (K2 is positive or negative).

S206: After the cursor is moved one grid, the timeout time is re-calculated based on the current |K1| or |K2|, the timer T1 or T2 is restarted, and step S204 is returned to.

Using the above method to proceed, the edited movement speed of the cursor will be adjusted automatically according to a |Kn| value. When |Kn| is less than the threshold thereof, the cursor is not moved, and when |Kn| is greater than the threshold thereof, the greater |Kn| is, the less timing time Tn is, and the faster the cursor moves, wherein n = 1 or 2.

In an embodiment of the disclosure, a user can also adjust the movement speed of the cursor by setting A1 and A2 values, or adjust the movement speed of the cursor by setting A1 and A2 values, so as to meet different habits and requirements of users.

### Embodiment 2

A method for implementing movement of a cursor by a mobile terminal in the embodiment of the disclosure is substantially the same as that in embodiment 1, and differs in that in the embodiment of the disclosure, before movement of the cursor is performed using a gravity inductor, it is determined whether a movement function of a gravity induction cursor is enabled. When the movement function of the gravity induction cursor is enabled, acceleration information of the mobile terminal is calculated according to a subscribed GVector event, thus achieving the movement of the cursor.

In the embodiment of the disclosure, in order to avoid that a cursor is moved by a user at will due to unintentional movement or rotary movement of the mobile terminal during a process of input and thus a normal use is affected, an on-off key may be arranged at a soft keyboard or an edge of the mobile terminal. When the on-off key is pressed, the movement function of the gravity induction cursor is enabled, and the cursor can be moved by gravity induction. In this way, not only convenience of an operation is ensured, but also no negative effect is caused due to random movement of the cursor.

To sum up, with the method of the disclosure, a user needs only to press a movement on-off key during the process of editing, and tilts a mobile terminal in all directions so as to move a cursor at will. The severer tilt is, and the faster the cursor moves. In this way, the trouble of repeated touch or key-press is reduced, high efficiency and convenience is achieved, and user experience is enhanced.

As shown in Fig. 4, the disclosure further provides a mobile terminal, which includes:
an information acquiring unit configured to acquire accelerations aₓ, a_{y}, and a_{z} of a mobile terminal in a set three-dimensional coordinate system;
a tilt rate calculating unit configured to calculate a current left/right tilt rate K1 and a current forward/backward tilt rate K2 of the mobile terminal; and
a cursor moving unit configured to move a cursor left/right or forward/backward based on the tilt rate K1 and the tilt rate K2.

Wherein, the information acquiring unit is configured to subscribe an acceleration induction vector GVector event, and acquire the accelerations aₓ, a_{y}, and a_{z} of the mobile terminal in set three-dimensional coordinate axes according to acquired GVector information in real time;
the tilt rate calculating unit is configured to, according to the accelerations aₓ, a_{y}, and a_{z}, obtain the left/right tilt rate K1 using aₓ/a_{y}, and obtain the forward/backward tilt rate K2 using a_{y}/a_{z}; and
the cursor moving unit specifically includes:
a timing sub-unit configured to start a preset left/right movement timeout timer T1 and a preset forward/backward movement timeout timer T2;
a determining sub-unit configured to, when the timer T1 or the timer T2 expires, determine whether the tilt rate |K1| or the tilt rate |K2| exceeds a set threshold; and
a cursor moving sub-unit configured to: when the tilt rate |K1| or the tilt rate |K2| exceeds the set threshold, move the cursor one grid left/right or forward/backward, continue to determining movement of the cursor based on the current |K1| or |K2|, and trigger the timing sub-unit.

Wherein, in the timing sub-unit, timing time of the timer T1 and timing time of the timer T2 are preset fixed values; or, timing time of the timer T1 is T1=A1/|K1| and timing time of the timer T2 is T2=A2/|K2|, wherein A1 and A2 are constants;
when T1=A1/|K1| and T2=A2/|K2|, before the cursor moving sub-unit triggers the timing sub-unit, the timing time T1 or T2 is re-calculated based on the current |K1| or |K2|.

Preferably, the mobile terminal of the disclosure further includes:
a detecting unit configured to: determine whether a movement function of a gravity induction cursor is enabled, and trigger the information acquiring unit when the movement function of the gravity induction cursor is enabled.

With the method of the disclosure, a user needs only to press a movement on-off key during the process of editing, and tilts a mobile terminal in all directions so as to move a cursor at will. The severer tilt is, and the faster the cursor moves. In this way, the trouble of repeated touch or key-press is reduced, high efficiency and convenience is achieved, and user experience is enhanced.

Obviously, those skilled in the art can make various modifications and variations to the disclosure without departing from the scope of the disclosure. Thus, if these modifications and variations of the disclosure fall within the scope of the claims of the disclosure and equivalent technologies thereof, the disclosure is also intended to include these modifications and variations.

### INDUSTRIAL APPLICABILITY

The disclosure utilizes a gravity inductor of a mobile terminal to implement movement of a cursor, reduces the trouble of moving the cursor by repeated touch or key-press, and solves the problem of an inaccuracy location of the cursor by a touch screen and a tedious operation of cursor location by key-press. A user needs only to tilt a mobile terminal in all directions during a process of editing, and then a cursor can be moved at will. Therefore, an efficiency of cursor location is increased, and user experience is enhanced.

## Claims

1. A method for implementing movement of a cursor by a mobile terminal, comprising:
acquiring (S101) accelerations aₓ, a_{y}, and a_{z} of a mobile terminal in a set three-dimensional coordinate system;
calculating (S102) a current left/right tilt rate K1 and a current forward/backward tilt rate K2 of the mobile terminal based on the accelerations aₓ, a_{y}, and a_{z}; and
moving (S103) a cursor left/right or forward/backward based on the tilt rate K1 and the tilt rate K2,
the method is **characterized in that** the step of moving a cursor left/right or forward/backward based on the tilt rate K1 and the tilt rate K2 specifically comprises:
A: starting (S204) a preset left/right movement timeout timer T1 and a preset forward/backward movement timeout timer T2;
B: when the timer T1 or the timer T2 expires, determining (S205) whether the tilt rate |K1| or the tilt rate |K2| exceeds a set threshold; and
C: when the tilt rate |K1| or the tilt rate |K2| exceeds the set threshold, moving the cursor one grid left/right or forward/backward, continuing to determining movement of the cursor based on the current |K1| or |K2|, and returning to the step A;
wherein timing time of the timer T1 is T1=A1/|K1| and timing time of the timer T2 is T2=A2/|K2|, wherein A1 and A2 are constants.

2. The method according to claim 1, wherein the step of acquiring accelerations aₓ, a_{y}, and a_{z} of a mobile terminal in a set three-dimensional coordinate system comprises:
subscribing (S201) an acceleration induction vector GVector event, and acquiring (S202) the accelerations aₓ, a_{y}, and a_{z} of the mobile terminal in set three-dimensional coordinate axes according to acquired GVector information in real time.

3. The method according to claim 1, wherein the step of calculating a current left/right tilt rate K1 and a current forward/backward tilt rate K2 of the mobile terminal based on the accelerations aₓ, a_{y}, and a_{z} comprises:
according to the accelerations aₓ, a_{y}, and a_{z}, obtaining (S203) the left/right tilt rate K1 using aₓ/a_{y}, and obtaining the forward/backward tilt rate K2 using a_{y}/a_{z}.

4. The method according to claim 1, wherein the step C further comprises, before returning to the step A, re-calculating (S206) the timing time T1 or T2 based on the current |K1| or |K2|.

5. The method according to claim 1, further comprising: before acquiring the accelerations aₓ, a_{y}, and a_{z} of the mobile terminal in the set three-dimensional coordinate system;
determining whether a movement function of a gravity induction cursor is enabled, and when the movement function of the gravity induction cursor is enabled, triggering an operation of acquiring the accelerations aₓ, a_{y}, and a_{z} of the mobile terminal in the set three-dimensional coordinate system.

6. A mobile terminal, comprising:
an information acquiring unit configured to acquire accelerations aₓ, a_{y}, and a_{z} of a mobile terminal in a set three-dimensional coordinate system;
a tilt rate calculating unit configured to calculate a current left/right tilt rate K1 and a current forward/backward tilt rate K2 of the mobile terminal based on the accelerations aₓ, a_{y}, and a_{z}; and
a cursor moving unit configured to move a cursor left/right or forward/backward based on the tilt rate K1 and the tilt rate K2,
the mobile terminal is **characterized in that** the cursor moving unit specifically comprises:
a timing sub-unit configured to start a preset left/right movement timeout timer T1 and a preset forward/backward movement timeout timer T2;
a determining sub-unit configured to, when the timer T1 or the timer T2 expires, determine whether the tilt rate |K1| or the tilt rate |K2| exceeds a set threshold; and
a cursor moving sub-unit configured to: when the tilt rate |K1| or the tilt rate |K2| exceeds the set threshold, move the cursor one grid left/right or forward/backward, continue to determining movement of the cursor based on the current |K1| or |K2|, and trigger the timing sub-unit,
wherein timing time of the timer T1 is T1=A1/|K1| and timing time of the timer T2 is T2=A2/|K2|, wherein A1 and A2 are constants.

7. The mobile terminal according to claim 6, wherein
the information acquiring unit is configured to subscribe an acceleration induction vector GVector event, and acquire the accelerations aₓ, a_{y}, and a_{z} of the mobile terminal in set three-dimensional coordinate axes according to acquired GVector information in real time; and
the tilt rate calculating unit is configured to, according to the accelerations aₓ, a_{y}, and a_{z}, obtain the left/right tilt rate K1 using aₓ/a_{y}, and obtain the forward/backward tilt rate K2 using a_{y}/a_{z}.

8. The mobile terminal according to claim 6, wherein before the cursor moving sub-unit triggers the timing sub-unit, the timing time T1 or T2 is re-calculated based on the current |K1| or |K2|.

9. The mobile terminal according to claim 6, further comprising:
a detecting unit configured to: determine whether a movement function of a gravity induction cursor is enabled, and trigger the information acquiring unit when the movement function of the gravity induction cursor is enabled.

## Patentansprüche

1. Verfahren zum Implementieren einer Bewegung eines Cursors durch ein mobiles Endgerät, Folgendes umfassend:
Erfassen (S101) von Beschleunigungen aₓ, a_{y} und a_{z} eines mobilen Endgeräts in einem festgelegten dreidimensionalen Koordinatensystem;
Berechnen (S102) einer aktuellen Links-/Rechtsneigungsrate K1 und einer aktuellen Vorwärts-/Rückwärtsneigungsrate K2 des mobilen Endgeräts auf Basis der Beschleunigungen aₓ, a_{y} und a_{z} und
Bewegen (S103) eines Cursors nach links/rechts oder vorwärts/rückwärts auf Basis der Neigungsrate K1 und der Neigungsrate K2,
wobei das Verfahren **dadurch gekennzeichnet ist, dass** der Schritt des Bewegens eines Cursors nach links/rechts oder vorwärts/rückwärts auf Basis der Neigungsrate K1 und der Neigungsrate K2 speziell Folgendes umfasst:
A: Starten (S204) eines voreingestellten Zeitablauftimers T1 für eine Bewegung nach links/rechts und eines voreingestellten Zeitablauftimers T2 für eine Vorwärts-/Rückwärtsbewegung;
B: wenn der Timer T1 oder der Timer T2 abläuft, Bestimmen (S205), ob die Neigungsrate |K1| oder die Neigungsrate |K2| einen festgelegten Schwellwert überschreitet; und
C: wenn die Neigungsrate |K1| oder die Neigungsrate |K2| den festgelegten Schwellwert überschreitet, Bewegen des Cursors um ein Raster nach links/rechts oder vorwärts/rückwärts, Fortfahren mit dem Bestimmen einer Bewegung des Cursors auf Basis der aktuellen |K1| oder |K2| und Zurückkehren zu Schritt A;
wobei eine Zeitsteuerungszeit des Timers T1 T1=A1/|K1| ist und eine Zeitsteuerungszeit des Timers T2 T2=A2/|K2| ist, wobei A1 und A2 Konstanten sind.

2. Verfahren nach Anspruch 1, wobei der Schritt des Erfassens der Beschleunigungen aₓ, a_{y} und a_{z} eines mobilen Endgeräts in einem festgelegten dreidimensionalen Koordinatensystem Folgendes umfasst:
Subskribieren (S201) eines Beschleunigungsbewirkungsvektor(GVector)-Ereignisses und Erfassen (S202) der Beschleunigungen aₓ, a_{y} und a_{z} des mobilen Endgeräts auf festgelegten dreidimensionalen Koordinatenachsen gemäß den erfassten GVector-Informationen in Echtzeit.

3. Verfahren nach Anspruch 1, wobei der Schritt des Berechnens einer aktuellen Links-/Rechtsneigungsrate K1 und einer aktuellen Vorwärts-/Rückwärtsneigungsrate K2 des mobilen Endgeräts auf Basis der Beschleunigungen aₓ, a_{y} und a_{z} Folgendes umfasst:
gemäß den Beschleunigungen aₓ, a_{y} und a_{z} Erhalten (S203) der Links-/Rechtsneigungsrate K1 unter Verwendung von aₓ/a_{y} und Erhalten der Vorwärts-/Rückwärtsneigungsrate K2 unter Verwendung von a_{y}/a_{z}.

4. Verfahren nach Anspruch 1, wobei der Schritt C vor dem Zurückkehren zu Schritt A ferner das erneute Berechnen (S206) der Zeitsteuerungszeit T1 oder T2 auf Basis der aktuellen |K1| oder |K2| umfasst.

5. Verfahren nach Anspruch 1, das ferner Folgendes umfasst: vor dem Erfassen der Beschleunigungen aₓ, a_{y} und a_{z} des mobilen Endgeräts im festgelegten dreidimensionalen Koordinatensystem
Bestimmen, ob eine Bewegungsfunktion eines Schwerkraftwirkungscursors aktiviert ist, und wenn die Bewegungsfunktion des Schwerkraftwirkungscursors aktiviert ist, Auslösen eines Vorgangs des Erfassens der Beschleunigungen aₓ, a_{y} und a_{z} des mobilen Endgeräts im festgelegten dreidimensionalen Koordinatensystem.

6. Mobiles Endgerät, das Folgendes umfasst:
eine Informationserfassungseinheit, die dazu ausgelegt ist, Beschleunigungen aₓ, a_{y} und a_{z} eines mobilen Endgeräts in einem festgelegten dreidimensionalen Koordinatensystem zu erfassen;
eine Neigungsratenberechnungseinheit, die dazu ausgelegt ist, eine aktuelle Links-/Rechtsneigungsrate K1 und eine aktuelle Vorwärts-/Rückwärtsneigungsrate K2 des mobilen Endgeräts auf Basis der Beschleunigungen aₓ, a_{y} und a_{z} zu berechnen; und
eine Cursorbewegungseinheit, die dazu ausgelegt ist, einen Cursor auf Basis der Neigungsrate K1 und der Neigungsrate K2 nach links/rechts oder vorwärts/rückwärts zu bewegen,
wobei das mobile Endgerät **dadurch gekennzeichnet ist, dass** die Cursorbewegungseinheit speziell Folgendes umfasst:
eine Zeitsteuerungsuntereinheit, die dazu ausgelegt ist, einen voreingestellten Zeitablauftimer T1 für eine Bewegung nach links/rechts und einen voreingestellten Zeitablauftimer T2 für eine Vorwärts-/Rückwärtsbewegung zu starten;
eine Bestimmungsuntereinheit, die dazu ausgelegt ist, wenn der Timer T1 oder der Timer T2 abläuft, zu bestimmen, ob die Neigungsrate |K1| oder die Neigungsrate |K2| einen festgelegten Schwellwert überschreitet; und
eine Cursorbewegungsuntereinheit, die zu Folgendem ausgelegt ist: wenn die Neigungsrate |K1| oder die Neigungsrate |K2| den festgelegten Schwellwert überschreitet, Bewegen des Cursors um ein Raster nach links/rechts oder vorwärts/rückwärts, Fortfahren mit dem Bestimmen einer Bewegung des Cursors auf Basis der aktuellen |K1| oder |K2| und Auslösen der Zeitsteuerungsuntereinheit,
wobei eine Zeitsteuerungszeit des Timers T1 T1=A1/|K1| ist und eine Zeitsteuerungszeit des Timers T2 T2=A2/|K2| ist, wobei A1 und A2 Konstanten sind.

7. Mobiles Endgerät nach Anspruch 6, wobei
die Informationserfassungseinheit dazu ausgelegt ist, ein Beschleunigungsbewirkungsvektor(GVector)-Ereignis zu subskribieren und die Beschleunigungen aₓ, a_{y} und a_{z} des mobilen Endgeräts auf festgelegten dreidimensionalen Koordinatenachsen gemäß den erfassten GVector-Informationen in Echtzeit zu erfassen; und
die Neigungsratenberechnungseinheit dazu ausgelegt ist, gemäß den Beschleunigungen aₓ, a_{y} und a_{z} die Links-/Rechtsneigungsrate K1 unter Verwendung von aₓ/a_{y} zu erhalten und die Vorwärts-/Rückwärtsneigungsrate K2 unter Verwendung von a_{y}/a_{z} zu erhalten.

8. Mobiles Endgerät nach Anspruch 6, wobei, bevor die Cursorbewegungsuntereinheit die Zeitsteuerungsuntereinheit auslöst, die Zeitsteuerungszeit T1 oder T2 auf Basis der aktuellen |K1| oder |K2| neu berechnet wird.

9. Mobiles Endgerät nach Anspruch 6, das ferner Folgendes umfasst:
eine Detektionseinheit, die zu Folgendem ausgelegt ist: Bestimmen, ob eine Bewegungsfunktion eines Schwerkraftwirkungscursors aktiviert ist, und Auslösen der Informationserfassungseinheit, wenn die Bewegungsfunktion des Schwerkraftwirkungscursors aktiviert ist.

## Revendications

1. Procédé pour implémenter le déplacement d'un curseur par un terminal mobile, comprenant :
l'acquisition (S101) d'accélérations aₓ, a_{y}, et a_{z} d'un terminal mobile dans un système défini de coordonnées tridimensionnelles ;
le calcul (S102) d'un taux actuel d'inclinaison vers la gauche/vers la droite K1 et d'un taux actuel d'inclinaison vers l'avant/vers l'arrière K2 du terminal mobile sur la base des accélérations aₓ, a_{y}, et a_{z} ; et
le déplacement (S103) d'un curseur vers la gauche/vers la droite ou vers l'avant/vers l'arrière sur la base du taux d'inclinaison K1 et du taux d'inclinaison K2,
le procédé est **caractérisé en ce que** l'étape du déplacement d'un curseur vers la gauche/vers la droite ou vers l'avant/vers l'arrière sur la base du taux d'inclinaison K1 et du taux d'inclinaison K2 comprend spécifiquement :
A : le démarrage (S204) d'un compteur de temps d'arrêt préréglé de déplacement vers la gauche/vers la droite T1 et d'un compteur de temps d'arrêt préréglé de déplacement vers l'avant/vers l'arrière T2 ;
B : lorsque le compteur de temps T1 ou le compteur de temps T2 expire, la détermination (S205) que le taux d'inclinaison |K1| ou le taux d'inclinaison |K2| dépasse ou non un seuil défini ; et
C : lorsque le taux d'inclinaison |K1| ou le taux d'inclinaison |K2| dépasse le seuil défini, le déplacement du curseur d'une grille vers la gauche/vers la droite ou vers l'avant/vers l'arrière, la continuation de la détermination du déplacement du curseur sur la base du taux |K1| ou |K2| actuel, et le retour à l'étape A ;
dans lequel le temps de mesure de temps du compteur de temps T1 est T1=A1/|K11 et le temps de mesure de temps du compteur de temps T2 est T2=A2/|K2|, dans lequel A1 et A2 sont des constantes.

2. Procédé selon la revendication 1, dans lequel l'étape de l'acquisition d'accélérations aₓ, a_{y}, et a_{z} d'un terminal mobile dans un système défini de coordonnées tridimensionnelles comprend :
l'abonnement (S201) à un événement de vecteur d'induction d'accélération GVector, et l'acquisition (S202) des accélérations aₓ, a_{y}, et a_{z} du terminal mobile dans des axes définis de coordonnées tridimensionnelles selon des informations de GVector acquises en temps réel.

3. Procédé selon la revendication 1, dans lequel l'étape du calcul d'un taux actuel d'inclinaison vers la gauche/vers la droite K1 et d'un taux actuel d'inclinaison vers l'avant/vers l'arrière K2 du terminal mobile sur la base des accélérations aₓ, a_{y}, et a_{z} comprend :
selon les accélérations aₓ, a_{y}, et a_{z}, l'obtention (S203) du taux d'inclinaison vers la gauche/vers la droite K1 en utilisant aₓ/a_{y}, et l'obtention du taux d'inclinaison vers l'avant/vers l'arrière K2 en utilisant a_{y}/a_{z}.

4. Procédé selon la revendication 1, dans lequel l'étape C comprend en outre, avant de retourner à l'étape A, le recalcul (S206) du temps de mesure de temps T1 ou T2 sur la base du taux |K1| ou |K2| actuel.

5. Procédé selon la revendication 1, comprenant en outre : avant l'acquisition des accélérations aₓ, a_{y}, et a_{z} du terminal mobile dans le système défini de coordonnées tridimensionnelles ;
la détermination qu'une fonction de déplacement d'un curseur à induction par gravité est activée ou non, et lorsque la fonction de déplacement du curseur à induction par gravité est activée, le déclenchement d'une opération de l'acquisition des accélérations aₓ, a_{y}, et a_{z} du terminal mobile dans le système défini de coordonnées tridimensionnelles.

6. Terminal mobile, comprenant :
une unité d'acquisition d'informations configurée pour acquérir des accélérations aₓ, a_{y}, et a_{z} d'un terminal mobile dans un système défini de coordonnées tridimensionnelles ;
une unité de calcul de taux d'inclinaison configurée pour calculer un taux actuel d'inclinaison vers la gauche/vers la droite K1 et un taux actuel d'inclinaison vers l'avant/vers l'arrière K2 du terminal mobile sur la base des accélérations aₓ, a_{y}, et a_{z} ; et
une unité de déplacement de curseur configurée pour déplacer un curseur vers la gauche/vers la droite ou vers l'avant/vers l'arrière sur la base du taux d'inclinaison K1 et du taux d'inclinaison K2,
le terminal mobile est **caractérisé en ce que** l'unité de déplacement de curseur comprend spécifiquement :
une sous-unité de mesure de temps configurée pour démarrer un compteur de temps d'arrêt préréglé de déplacement vers la gauche/vers la droite T1 et un compteur de temps d'arrêt préréglé de déplacement vers l'avant/vers l'arrière T2 ;
une sous-unité de détermination configurée pour, lorsque le compteur de temps T1 ou le compteur de temps T2 expire, déterminer que le taux d'inclinaison |K1| ou le taux d'inclinaison |K2| dépasse ou non un seuil défini ; et
une sous-unité de déplacement de curseur configurée pour : lorsque le taux d'inclinaison |K1| ou le taux d'inclinaison |K2| dépasse le seuil défini, déplacer le curseur d'une grille vers la gauche/vers la droite ou vers l'avant/vers l'arrière, continuer de déterminer le déplacement du curseur sur la base du taux |K1| ou |K2| actuel, et déclencher la sous-unité de mesure de temps,
dans lequel le temps de mesure de temps du compteur de temps T1 est T1=A1/|K11 et le temps de mesure de temps du compteur de temps T2 est T2=A2/|K2|, dans lequel A1 et A2 sont des constantes.

7. Terminal mobile selon la revendication 6, dans lequel
l'unité d'acquisition d'informations est configurée pour s'abonner à un événement de vecteur d'induction d'accélération GVector, et acquérir les accélérations aₓ, a_{y}, et a_{z} du terminal mobile dans des axes définis de coordonnées tridimensionnelles selon des informations de GVector acquises en temps réel ; et
l'unité de calcul de taux d'inclinaison est configurée pour, selon les accélérations aₓ, a_{y}, et a_{z}, obtenir le taux d'inclinaison vers la gauche/vers la droite K1 en utilisant aₓ/a_{y}, et obtenir le taux d'inclinaison vers l'avant/vers l'arrière K2 en utilisant a_{y}/a_{z}.

8. Terminal mobile selon la revendication 6, dans lequel, avant que l'unité de déplacement de curseur déclenche la sous-unité de mesure de temps, le temps de mesure de temps T1 ou T2 est recalculé sur la base du taux |K1| ou |K2| actuel.

9. Terminal mobile selon la revendication 6, comprenant en outre :
une unité de détection configurée pour : déterminer qu'une fonction de déplacement d'un curseur à induction par gravité est activée ou non, et déclencher l'unité d'acquisition d'informations lorsque la fonction de déplacement du curseur à induction par gravité est activée.
